# FASCICULE DE BREVET EUROPEEN

(11) **EP 1 438 246 B1**
(45) Date de publication et mention de la délivrance du brevet: **31.08.2005**
(21) Numéro de dépôt: 02788028.5
(22) Date de dépôt: 21.10.2002
(51) Int. Cl.: B65G 53/22, B65G 53/66, C25C 3/14

(54) **SYSTEME DE REPARTITION DE MATIERE PULVERULENTE AVEC DEBITS PONDERAUX CONTROLES**
VERTEILERSYSTEM VON PULVENFÖRMIGEN MATERIAL MIT GESTEUERTEM GEWICHTSDURCHSATZ
SYSTEM FOR DISTRIBUTING A PULVERULENT MATERIAL WITH CONTROLLED GRAVIMETRIC FLOW RATES

(30) Priorité: 26.10.2001 FR 0113909
(43) Date de publication de la demande: 21.07.2004
(73) Titulaire: ALUMINIUM PECHINEY, 75218 Paris Cedex 16 (FR)
(72) Inventeur: CLOUE, Christian, F-13120 Gardanne (FR); ROUMIEU, Raymond, Aramis 1, F-13100 Aix en Provence (FR)
(74) Mandataire: Fénot, Dominique
(86) Numéro de dépôt international: PCT/FR2002/003598
(87) Numéro de publication internationale: WO 2003/035519

(56) Documents cités:
- EP-A- 0 506 180
- WO-A-99/62800
- DE-B- 1 150 320
- US-A- 3 870 374
- US-A- 4 930 691
- US-A- 5 299 694

## Description

### DOMAINE TECHNIQUE

L'invention concerne un procédé de convoyage de matériau pulvérulent permettant de répartir ladite matière pulvérulente provenant d'un convoyeur amont dans plusieurs convoyeurs avals avec un débit contrôlé dans chacun des convoyeurs avals. En particulier, il s'agit d'alimenter en alumine, avec des quantités contrôlées, les réacteurs des centres de traitement des gaz qui permettent de capter les effluents fluorés issus des cuves de production d'aluminium par électrolyse ignée.

### ETAT DE LA TECHNIQUE

Les gaz sortant des cuves de production d'aluminium par électrolyse ignée contiennent une proportion notable de gaz fluor et de composés fluorés. Pour éviter le rejet du fluor et des composés fluorés dans l'atmosphère, on projette de l'alumine sous forme pulvérulente dans lesdits gaz de sortie des cuves. L'alumine adsorbe le fluor, ce qui a une double conséquence bénéfique : le rejet dans l'atmosphère des gaz est moins agressif à l'égard de l'environnement et l'alumine, plus riche en fluor, présente une plus basse température de solubilisation dans la cryolite.

La mise en contact de l'alumine et des gaz de sortie des cuves s'effectue dans un ensemble de dispositifs appelés réacteurs et regroupés en un ou plusieurs centres de traitement des gaz. Un réacteur de ce type est décrit dans la demande FR 2 692 497 (PROCEDAIR). Malgré le volume important (typiquement de l'ordre de 1000 m³) occupé par de tels dispositifs, il est nécessaire d'en utiliser plusieurs pour adsorber la majeure partie du fluor et des composés fluorés contenus dans les gaz de sortie des cuves d'électrolyse. Ainsi, chaque centre de traitement des gaz, associé à un certain nombre de cuves d'électrolyse, doit, suivant le niveau de fonctionnement desdites cuves, être alimenté avec une plus ou moins grande quantité d'alumine pulvérulente. De la sorte la quasi totalité de l'alumine destinée à la production d'aluminium doit d'abord passer par l'un ou l'autre des centres de traitement des gaz avant de venir alimenter l'une ou l'autre des cuves d'électrolyse.

L'alumine est d'abord stockée dans un premier réservoir - dont la capacité typique est de l'ordre de 10 000 tonnes. Elle est ensuite divisée et dirigée vers les centres de traitement des gaz. Il faut s'assurer que la quasi totalité du fluor et des composés fluorés contenus dans le gaz entrant dans un réacteur d'un centre de traitement des gaz va pouvoir être retenue par l'alumine. Pour cela, il est nécessaire de contrôler le débit de l'alumine injectée dans chaque réacteur d'un centre de traitement des gaz. Une fois traitée, l'alumine "fluorée" provenant de différents centres de traitement des gaz est ensuite recueillie, mélangée puis stockée dans un deuxième réservoir de stockage, à partir duquel les différentes cuves d'électrolyse sont alimentées.

Les demandes WO84/01560, WO85/04676, WO99/58435 et WO99/62800 décrivent des dispositifs de convoyage, appelés "aérocanalisations" qui permettent de convoyer, sous une forme potentiellement fluidisable - appelée également fluidisée hyperdense - l'alumine entre le deuxième réservoir de stockage (évoqué dans le paragraphe précédent) et les cuves d'électrolyse. Le transport de l'alumine sous forme de lit fluidisé hyperdense, mis au point par la demanderesse, est un procédé particulièrement efficace qui se distingue des procédés classiques de convoyage de matière pulvérulente. Dans ces procédés classiques, le convoyeur utilisé, appelé "aéroglissière", comporte peu de matière pulvérulente et est traversé par des courants gazeux à cinétique élevée alors que le procédé de convoyage en lit fluidisé hyperdense est caractérisé par un convoyeur presque complètement rempli de matière pulvérulente dans lequel un gaz de fluidisation circule à très faible vitesse

Dans le procédé de convoyage en lit fluidisé hyperdense, la circulation de la matière pulvérulente est réalisée par une succession de micro-éboulements qui sont générés au niveau de l'alimentation de la cuve d'électrolyse et qui "remontent" dans les aérocanalisations vers le réservoir de stockage. Pour faciliter cette remontée de micro-éboulements, on injecte sous pression le gaz de fluidisation à travers une paroi poreuse qui sépare l'aérocanalisation en deux canaux, ledit gaz de fluidisation circulant à très faible vitesse dans l'aérocanalisation et s'évacuant par une colonne d'équilibrage et de dégazage. Ménageant la matière pulvérulente - il n'y a pas d'attrition en raison de la faible vitesse du gaz de fluidisation circulant dans l'aérocanalisation -, le procédé de convoyage en lit fluidisé hyperdense est connu à l'heure actuelle comme un procédé de convoyage économique et fiable particulièrement adapté pour le transport et la distribution de matière pulvérulente entre des points relativement distants dans la mesure où l'on ne recherche par un dosage précis de la matière distribuée.

Par ailleurs, pour contrôler le débit de la matière pulvérulente, la demanderesse a proposé dans EP 0 190 082 un dispositif que nous appellerons par la suite "doseur fluidisé hyperdense". Ce dispositif comprend un caisson, une colonne permettant d'alimenter en matière pulvérulente le caisson à partir d'un moyen de stockage et un moyen d'évacuation de ladite matière pulvérulente. Le caisson est comme l'aérocanalisation en deux parties pour permettre de mettre la matière pulvérulente dans un état de fluidisation potentielle. Le moyen d'évacuation comprend un orifice et un ajutage de sortie dont le diamètre interne est supérieur à celui de l'orifice. Le moyen d'évacuation est disposé à une distance suffisante de la colonne d'alimentation pour qu'en l'absence de fluidisation, il ne puisse pas être atteint par le pied du talus naturel d'éboulement. Lorsqu'on introduit le gaz de fluidisation, on constate que, pour une matière pulvérulente donnée et un ajutage donné, il existe une relation biunivoque entre le débit de sortie de la matière pulvérulente et la pression de fluidisation imposée dans ledit doseur fluidisé hyperdense.

Lorsque la pression de fluidisation est nulle dans le caisson, la matière pulvérulente stockée dans le moyen de stockage descend par gravité dans une colonne débouchant dans la seconde partie du caisson en formant sur la paroi poreuse un talus naturel d'éboulement. L'orifice de sortie est situé immédiatement au-dessus du niveau de la paroi poreuse à une distance telle qu'il n'est pas atteint par le pied du talus d'éboulement lorsque la pression de fluidisation dans le caisson est nulle. Lorsque le gaz de fluidisation est injecté, la matière pulvérulente du talus d'éboulement devient fluide et la partie haute du caisson se remplit de matière pulvérulente de telle sorte que celle-ci peut passer à travers l'orifice de sortie.

Malgré cela, il n'était jusqu'à présent pas possible de convoyer l'alumine sous forme de lit fluidisé hyperdense en amont du deuxième réservoir de stockage parce qu'il fallait mesurer le débit global et répartir l'alumine dans les différents convoyeurs destinés à alimenter les réacteurs des centres de traitement des gaz. Ces deux fonctions ne pouvaient être remplies que si la matière pulvérulente était fluidisée sous l'effet d'un gaz circulant à grande vitesse. Les convoyeurs étaient des convoyeurs classiques, de type aéroglissières.

Ainsi, pour mesurer en continu le débit global d'alumine pulvérulente, on utilise par exemple un débitmètre solide comme le débitmètre Granumet DE 10 proposé par la société RAMSEY. Ce dernier fonctionne sur le principe de la mesure de la force d'impact de la poudre qui est projetée sur une plaque. Il faut donc que la matière pulvérulente s'écoule de façon continue et avec une énergie cinétique minimale (et non de manière saccadée, par remontées de micro-éboulements), ce qui ne peut se faire que si elle est transportée à l'aide d'un gaz circulant à grande vitesse.

De même, en ce qui conceme la répartition de l'alumine entre un réservoir de stockage central et plusieurs réacteurs regroupés en un ou plusieurs centres de traitement des gaz, l'art antérieur connu propose plusieurs dispositifs différents mais qui nécessitent tous l'emploi d'un gaz circulant à une vitesse suffisante pour entraîner la matière pulvérulente à travers des ouvertures à section calibrée.

Ainsi US 4 938 848 décrit un dispositif de répartition comportant une chambre placée sous le réservoir de stockage et traversée par une pluralités de conduits ouverts au niveau de la chambre et à l'intérieur desquels on insuffle un gaz sous pression pour entraîner la poudre en dehors de la chambre, à l'intérieur desdits conduits. Dans ce dispositif comme dans les autres, le débit d'alumine dans chaque conduit peut être contrôlé soit en faisant varier la pression avec laquelle le gaz est insufflé dans le conduit, soit en modifiant la surface de l'ouverture du conduit dans la chambre, par exemple en déplaçant plus ou moins un volet obturateur - que nous appellerons par la suite "martelière" devant ladite ouverture.

Ainsi, pour s'assurer que l'alumine entre dans chaque réacteur de centre de traitement des gaz avec un débit suffisant pour capter le maximum de fluor et de composés fluorés avant l'évacuation des gaz dans l'atmosphère, les dispositifs de l'art antérieur comprennent un debit-mètre solide mesurant en continu le débit total d'alumine puis, en aval, une boîte de répartition munie sur sa paroi latérale de plusieurs orifices calibrés. L'alumine est fluidisée avec une pression de gaz de fluidisation telle qu'elle est entraînée au travers de chacun de ces orifices avec un débit contrôlé, le contrôle s'effectuant par exemple en faisant varier l'aire d'ouverture de chaque orifice. Au-delà de chacun de ces orifices, l'alumine est conduite à l'aide d'une aéroglissière vers un réacteur de centre de traitement des gaz.

Autant le débitmètre solide que la boîte de répartition nécessitent l'emploi d'un gaz de fluidisation circulant à grande vitesse. En amont et en aval de ces dispositifs, on trouve donc des aéroglissières. De façon à assurer une alimentation fiable et sans à-coups de l'alumine, les aéroglissières ont une pente minimale de 6%, de préférence au moins égal a 10%. En conséquence, compte tenu des longueurs à franchir, le dispositif d'alimentation en quantités contrôlées de l'alumine de l'art antérieur doit être surélevé de plusieurs mètres, typiquement 6 mètres, par rapport au niveau d'alimentation en alumine des centres de traitements des gaz. On estime le surcoût lié à cette surélévation imposée par la présence des aéroglissières à près de 10% du montant total du coût du dispositif d'alimentation en alumine des cuves d'électrolyse.

### PROBLEMES POSES

L'emploi de dispositifs de contrôle et de répartition des débits d'alumine nécessite un débit de gaz de fluidisation important, ce qui impose des installations de compression du gaz de fluidisation importantes et entraîne une consommation élevée de gaz et d'énergie. De plus, la cinétique importante de la matière pulvérulente a pour conséquences néfastes des problèmes d'attrition de la matière, des problèmes d'usure des éléments de la boîte de répartition, et des difficultés de réglage des débits (on a du mal à faire coulisser les martelières pour faire varier les surfaces des ouvertures calibrées du répartiteur).

De plus, la présence obligatoire d'aéroglissières en aval de la boîte de distribution impose, en raison de la pente minimale de 6% à respecter, des équipements situés très haut au-dessus des cuves d'électrolyse. Il faut donc consacrer des investissements très importants pour réaliser les installations d'alimentation en alumine des centres de traitement des gaz.

La demanderesse a donc cherché à mettre au point un procédé de répartition de l'alumine plus économique, plus facile à contrôler et qui ne présente pas les inconvénients cités plus haut. Ce procédé de répartition doit pouvoir être appliqué à toute autre matière pulvérulente ayant une fluidité comparable à celle de l'alumine, ladite matière pulvérulente provenant d'une capacité de stockage unique et devant être répartie dans plusieurs convoyeurs avec un débit contrôlé dans chacun de ces convoyeurs.

### OBJET DE L'INVENTION

L'objet selon l'invention est un procédé de convoyage de matériau pulvérulent permettant de répartir dans plusieurs convoyeurs ledit matériau pulvérulent provenant d'une capacité de stockage unique avec un débit contrôlé dans chacun desdits convoyeurs caractérisé en ce que ladite capacité de stockage est reliée aux dits convoyeurs par au moins une aérocanalisation et en ce que chaque convoyeur est alimenté par un doseur fluidisé hyperdense connecté sur ladite aérocanalisation.

L'aérocanalisation est décrite en détail dans WO84/01560 et WO85/04676. C'est un convoyeur horizontal ou légèrement incliné (de préférence moins de 2 degrés par rapport à l'horizontale), muni de moyens de fluidisation constitués par un premier canal destiné à la circulation d'un gaz et un second canal destiné à la circulation du matériau pulvérulent, les deux canaux ayant une paroi commune poreuse, le premier canal étant muni d'au moins une tubulure d'alimentation en gaz permettant d'établir une pression p_{f} dans le but de fluidiser potentiellement le matériau pulvérulent remplissant le convoyeur et le deuxième canal étant muni d'au moins une colonne d'équilibrage dont la hauteur de remplissage équilibre la pression p_{f} du gaz de fluidisation potentielle.

L'aérocanalisation peut avoir une section générale rectangulaire ou encore une section générale de forme circulaire. Dans ce demier cas, le premier canal destiné à la circulation d'un gaz et le second canal destiné à la circulation du matériau pulvérulent peuvent être co-axiaux. Toutefois, pour obtenir une aérocanalisation au moindre coût, le premier canal occupe de préférence la partie basse du convoyeur, le second canal occupe la partie haute du convoyeur et les deux parties sont séparées par une paroi plate poreuse sensiblement horizontale.

Le doseur fluidisé hyperdense est décrit en détail dans EP 0 190 082. Il comporte un caisson en deux parties. La première partie du caisson, située dans le bas du caisson, est destinée à la circulation d'un gaz de fluidisation et la seconde partie du caisson, située au-dessus de la première, est destinée à la circulation du matériau pulvérulent. Les deux parties ont une paroi commune poreuse sensiblement horizontale. La première partie est munie d'au moins une tubulure d'alimentation en gaz permettant d'établir une pression p'_{f} dans le but de fluidiser potentiellement le matériau pulvérulent remplissant le doseur et la deuxième partie est munie d'au moins une colonne d'équilibrage dont la hauteur de remplissage équilibre la pression p'_{f} du gaz de fluidisation potentielle.

La seconde partie du caisson est également reliée non pas directement à la capacité de stockage mais, par le biais d'une colonne verticale, au deuxième canal de l'aérocanalisation. Lorsque la pression de fluidisation p'_{f} est nulle, la matière pulvérulente située dans le deuxième canal de l'aérocanalisation descend par gravité dans une colonne débouchant dans la seconde partie du caisson en formant sur la paroi poreuse un talus naturel d'éboulement. Lorsque le talus est formé, la matière pulvérulente sortant par cette colonne de l'aérocanalisation reste immobile puisqu'il n'y a aucune cause de micro-éboulements ni de remontée de ces derniers.

Le moyen d'évacuation comprend un orifice de sortie situé immédiatement au-dessus du niveau de la paroi poreuse à une distance telle qu'il n'est pas atteint par le pied du talus d'éboulement. La deuxième partie du caisson étant ainsi remplie, on envoie le gaz de fluidisation et on règle le niveau de pression p'f au moyen d'un moyen de réglage tel qu'une vanne. Le gaz diffuse au travers de la paroi poreuse vers la première partie du caisson, la matière pulvérulente du talus d'éboulement devient fluide. La partie haute du caisson puis la colonne d'équilibrage se remplissent de matière pulvérulente jusqu'à une hauteur H, qui dépend de la pression p'f du gaz de fluidisation et de la densité moyenne de la matière pulvérulente dans la colonne d'équilibrage.

L'orifice de sortie est éventuellement muni d'un ajutage formant diaphragme, dont la partie extérieure peut être raccordée à la tuyauterie d'évacuation de la matière pulvérulente fluidisée. La matière pulvérulente, en état de fluidisation potentielle dans le caisson du doseur, peut passer par l'orifice de sortie. Elle est renouvelée par micro-éboulements successifs qui "remontent" en cascade jusqu'à la colonne d'alimentation du doseur fluidisé hyperdense et au-delà, dans le deuxième canal de l'aérocanalisation. Très localement, au niveau de l'orifice et directement en aval de celui-ci, chaque éboulement libère un espace suffisant pour que la matière pulvérulente passe de l'état de fluidisation potentielle à l'état de fluidisation vraie, ce qui assure pour une large gamme de débits un apport d'alumine égal au débit de sortie sans à-coups dans ce débit.

Si la pression p'f reste constante, le débit pondéral de matière pulvérulente reste remarquablement constant. Si l'on augmente ladite pression de fluidisation p'f, le débit augmente. Si on l'annule, la matière pulvérulente ne circule plus et ne passe pas par l'orifice. Ainsi, le débit de la matière pulvérulente peut être réglé uniquement en agissant sur la pression p'f du gaz de fluidisation, ce qui est un moyen beaucoup plus souple et sûr que celui consistant à essayer de faire coulisser une martelière devant une ouverture (les rainures servant au guidage de la martelière sont remplies de matière pulvérulente, ce qui ne facilite pas le glissement; de plus les rails sont rapidement abrasés).

De préférence, la source et/ou le moyen de réglage de la pression de fluidisation p'f dans le doseur est indépendante de celle de la pression de fluidisation dans l'aérocanalisation. De préférence encore, chaque doseur fluidisé hyperdense dispose de son propre moyen de réglage de la pression p'f, ce qui permet d'avoir une grande souplesse de fonctionnement, chacun des convoyeurs étant ainsi alimenté en matière pulvérulente avec un débit contrôlé, adapté à la fonction spécifique du convoyeur.

Selon l'invention, il existe au moins une aérocanalisation entre la capacité de stockage et les convoyeurs, chaque convoyeur étant alimenté par un doseur fluidisé hyperdense tel que décrit précédemment. C'est l'aérocanalisation elle-même qui fait office de répartiteur, la fonction de répartition étant remplie de façon délocalisée. L'aérocanalisation doit avoir une section suffisamment grande pour qu'elle puisse rester continuellement presque complètement remplie, de telle sorte que tout déplacement de la matière pulvérulente ne s'effectue que par remontée de micro-éboulements. Dans ces conditions, il n'est pas nécessaire de contrôler continuellement le flux global de la matière pulvérulente: il suffit que la capacité de stockage soit très importante et que l'aérocanalisation ait une section élevée.

En reprenant l'exemple de l'alimentation des centres de traitement des gaz issus des cuves d'électrolyse, l'aérocanalisation est reliée en une de ses extrémités avec une capacité de stockage aérien de l'alumine et est munie d'autant de doseurs fluidisés que de réacteurs de traitement des gaz. Ces doseurs fluidisés alimentent des aéroglissières telles que celles référencées 32 dans FR 2 692 497. On peut placer chaque doseur fluidisé hyperdense à proximité de chaque réacteur de traitement des gaz: de la sorte, l'aéroglissière reste courte et le dénivelé imposé la pente minimale de 6° de ladite aéroglissière reste faible. Pour diminuer au mieux cette distance, il est possible de réaliser une aérocanalisation non rectiligne ou encore, comme dans l'exemple qui suit, plusieurs aérocanalisations communiquant entre elles.

Comme dans WO99/58435, on peut également créer une bulle de gaz de fluidisation dans la partie supérieure de l'aérocanalisation. De la sorte, le gaz de fluidisation peut circuler plus facilement, ce qui améliore les conditions de fluidisation potentielle qui doivent être remplies en tout endroit de l'aérocanalisation.

### FIGURES

La figure 1 représente une vue axonométrique et schématisée d'un circuit d'alimentation en alumine des centres de traitement des gaz issus des cuves d'électrolyse ignée.

La figure 2 représente une coupe d'un doseur fluidisé hyperdense connecté à l'aérocanalisation.

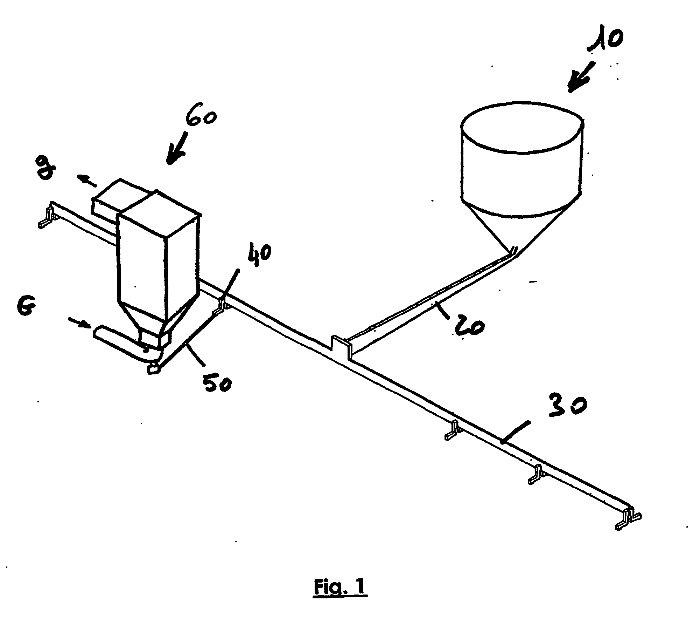

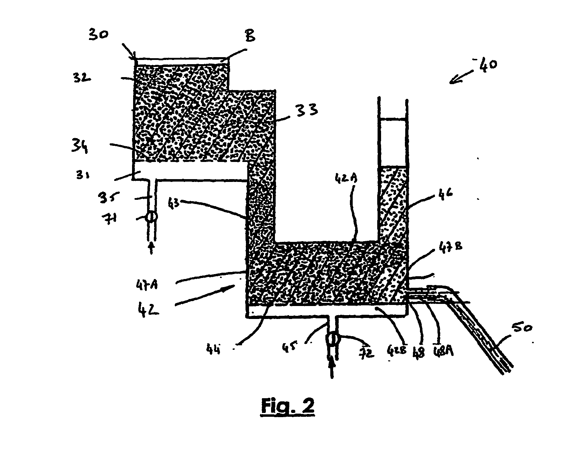

### MODE DE REALISATION DE L'INVENTION (figures 1 et 2)

Dans l'exemple illustré par les figures 1 et 2, il s'agit d'alimenter en alumine les vingt-quatre réacteurs - regroupés en deux centres de traitement - nécessaires pour traiter les gaz-issus de plus de 300 cuves d'électrolyse ignée. Un seul de ces réacteurs est représenté sur la figure 1. Il est associé à un certain nombre de cuves dont le fonctionnement peut être notablement différent de celui des cuves voisines et qui par conséquent peuvent émettre des gaz effluents avec des débits très différents. Il s'agit donc d'alimenter chaque réacteur de traitement des gaz avec un débit d'alumine adapté au débit de gaz effluents émis par l'ensemble de cuves associées audit de traitement des gaz.

L'alumine est acheminée du premier réservoir de stockage **10** vers les réacteurs de traitement des gaz **60.** Une fois traitée, l'alumine "fluorée" provenant de différents réacteurs de traitement des gaz est recueillie, mélangée puis stockée dans un deuxième réservoir de stockage destiné à alimenter les cuves d'électrolyse. Cette partie n'est pas illustrée sur la figure 1 mais peut être facilement représentée en faisant sortir l'alumine "fluorée" par le trop plein 34 illustré sur la figure de FR 2 692 497 et en la faisant acheminer vers la capacité de stockage 31 de l'installation d'alimentation en alumine des cellules d'électrolyse illustré sur la figure de WO85/04676.

Les gaz **G** issu des cuves d'électrolyse entre par un conduit vertical du type de celui référencé 26 dans FR 2 692 497 et entraîne les particules d'alumine amenées par l'aéroglissière **50** prolongée par un tube vertical coaxial au conduit 26 de FR 2 692 497. Les gaz traités **g** sont évacués par le haut du réacteur de traitement.

Chaque réacteur de traitement des gaz **60** est alimenté en alumine par une aéroglissière **50,** elle-même alimentée par un doseur fluidisé hyperdense **40** connecté à l'aérocanalisation **30.** Les douze doseurs fluidisés sont connectés sur la même aérocanalisation **30** qui elle-même est alimentée par l'alumine provenant du premier réservoir de stockage **10** par l'intermédiaire d'une aérocanalisation amont **20.**

Sur la figure 2 représente une section de l'aérocanalisation **30,** au droit d'un piquage qui la relie à un doseur fluidisé hyperdense. L'aérocanalisation **30** est un convoyeur horizontal, muni de moyens de fluidisation constitués par un premier canal **31** destiné à la circulation d'air et un second canal **32** destiné à la circulation de l'alumine. Les deux canaux ont une paroi commune poreuse **34.** Le premier canal **31** est muni d' une tubulure **35** d'alimentation en air permettant d'établir une pression p_{f} de fluidisation potentielle. Le deuxième canal **32** est muni d'au moins une colonne d'équilibrage dont la hauteur de remplissage équilibre la pression p_{f} de fluidisation potentielle (cette colonne n'est pas représentée car elle ne se trouve pas au niveau du plan de la section). A proximité de chaque réacteur de traitement des gaz, l'aérocanalisation est munie d'un piquage **33** qui met en communication le second canal **32** avec la colonne d'alimentation **43** du doseur fluidisé hyperdense **40.**

Le doseur fluidisé hyperdense comporte un caisson **42** en deux parties. La première partie **42B** du caisson, située dans le bas du caisson, est destinée à la circulation de l'air de fluidisation et la seconde partie **42A** du caisson, située au-dessus de la première, est destinée à la circulation de l'alumine. Les deux parties ont une paroi commune poreuse **44** sensiblement horizontale. La première partie **42B** est munie d'une tubulure **45** d'alimentation en air permettant d'établir une pression p'_{f} de fluidisation potentielle de l'alumine remplissant le doseur et la deuxième partie **42A** est munie d'une colonne d'équilibrage **46** dont la hauteur de remplissage équilibre la pression p'_{f} de fluidisation potentielle.

La seconde partie **42B** du caisson est également reliée, par le biais de la colonne verticale **43,** au deuxième canal **32** de l'aérocanalisation **30.** Lorsque la pression de fluidisation p'_{f} est nulle, l'alumine située dans le deuxième canal **32** de l'aérocanalisation descend par gravité dans la colonne **43** débouchant dans la seconde partie **42B** du caisson en formant sur la paroi poreuse **44** un talus naturel d'éboulement dont le pied n'atteint pas l'orifice **48.** L'orifice de sortie **48** est situé immédiatement au-dessus du niveau de la paroi poreuse **44** à une distance telle qu'il n'est pas atteint par le pied du talus naturel d'éboulement.

Lorsque le gaz de fluidisation est injecté dans la seconde partie **42A** du caisson, l'alumine du talus d'éboulement devient fluide et la partie haute **42B** du caisson puis la colonne d'équilibrage **46** se remplissent d'alumine jusqu'à une hauteur qui dépend de la pression p'f du gaz de fluidisation et de la densité moyenne de l'alumine dans la colonne d'équilibrage. L'orifice de sortie **48** est muni d'un ajutage **48A** formant diaphragme, dont la partie extérieure est raccordée à l'aéroglissière **50** qui alimente en alumine le réacteur de traitement des gaz **60.**

On envoie le gaz de fluidisation par la canalisation **45** et on règle le niveau de pression p'f au moyen d'une vanne **72.** Le gaz diffuse au travers de la paroi poreuse **44** vers la première partie **42B** du caisson.

Chaque doseur fluidisé hyperdense **40** dispose de son propre moyen de réglage **72** de la pression p'f, ce qui permet d'avoir une grande souplesse de fonctionnement, chacun des réacteurs de traitement des gaz **60** étant ainsi alimenté en alumine avec un débit contrôlé, adapté au débit de gaz à traiter dans ce réacteur.

C'est l'aérocanalisation **30** qui fait office de répartiteur, la fonction de répartition étant remplie de façon délocalisée. Les aérocanalisations **20** et **30** possèdent un deuxième canal - destiné à la circulation de la : matière pulvérulente, dont la section est importante: si elle rectangulaire, elle fait typiquement au moins 400 mm * 200 mm, ce qui permet d'assurer la circulation de l'alumine avec un débit pouvant atteindre 5 à 50 tonnes/heure, suivant les besoins et la pression de fluidisation employée. L'aérocanalisation amont **20** est reliée à un réservoir de stockage d'une capacité de plus de 10 000 tonnes.

De la sorte, elle peut rester continuellement presque complètement remplie, de telle sorte que tout déplacement de la matière pulvérulente ne s'effectue que par remontée de micro-éboulements.

Chaque doseur fluidisé hyperdense **40** est placé à proximité de chaque réacteur de traitement des gaz **60:** de la sorte, l'aéroglissière **50** reste courte et le dénivelé imposé par la pente minimale de 6° de ladite aéroglissière **50** reste faible.

Comme dans WO99/58435, on a créé une bulle de gaz de fluidisation dans la partie supérieure **36** de l'aérocanalisation **30.** De la sorte, le gaz de fluidisation peut circuler plus facilement, ce qui améliore les conditions de fluidisation potentielle qui doivent être remplies en tout endroit de l'aérocanalisation et facilite la répartition et la distribution de l'alumine dans les différents convoyeurs avals.

### AVANTAGES

- suppression du débit-mètre pondéral en amont du dispositif de répartition
- possibilité de contrôler les débits en tout point
- absence de pièces mécaniques en mouvement (vannes, martelières, etc...) qui sont des causes de blocages ou d'arrêts pour entretien ou remplacement en raison notamment de l'usure due à la nature abrasive du matériau pulvérulent
- régulation des débits facilitée
- très faible consommation d'énergie

## Revendications

1. Procédé de convoyage d'un matériau pulvérulent permettant de répartir dans plusieurs convoyeurs (50) ledit matériau pulvérulent provenant d'une capacité de stockage unique (10) avec un débit contrôlé dans chacun desdits convoyeurs **caractérisé en ce qu'**on relie ladite capacité de stockage aux dits convoyeurs par au moins une aérocanalisation (30) et **en ce qu'**on branche sur ladite aérocanalisation un doseur fluidisé hyperdense (40) destiné à alimenter chacun des convoyeurs,
- ladite aérocanalisation (30) étant un convoyeur horizontal ou légèrement incliné comprenant un premier canal destiné à la circulation d'un gaz et un second canal destiné à la circulation du matériau pulvérulent, les deux canaux ayant une paroi commune poreuse, le premier canal étant muni d'au moins une tubulure d'alimentation en gaz permettant d'établir une pression p_{f} dans le but de fluidiser potentiellement le matériau pulvérulent remplissant le convoyeur et le deuxième canal étant muni d'au moins une colonne d'équilibrage dont la hauteur de remplissage équilibre la pression p_{f} du gaz de fluidisation potentielle,
- ledit doseur fluidisé étant un dispositif comprenant un caisson (42), une colonne (43) permettant d'alimenter en matière pulvérulente le caisson à partir dudit second canal de ladite aérocanalisation (30), une colonne d'équilibrage (46) et un moyen d'évacuation de ladite matière pulvérulente, ledit caisson comprenant deux parties (42A et 42B) séparées par une paroi poreuse (44), la première partie (42B), destinée à la circulation du gaz de fluidisation étant munie d'au moins une tubulure d'alimentation en gaz permettant d'établir une pression p'_{f} dans le but de fluidiser potentiellement le matériau pulvérulent remplissant le doseur et ta seconde partie (42A), destinée à la circulation de ladite matière pulvérulente, étant reliée à ladite colonne d'alimentation (43), audit moyen d'évacuation et à ladite colonne d'équilibrage (46) dont la hauteur de remplissage permet d'équilibrer la pression p'f de fluidisation potentielle, ledit moyen d'évacuation, comprenant un orifice (48) et un ajutage (48A) de sortie dont le diamètre interne est supérieur à celui de l'orifice, étant disposé à une distance suffisante de la colonne d'alimentation (43) pour qu'en l'absence de fluidisation, il ne puisse pas être atteint par le pied du talus naturel d'éboulement.

2. Procédé selon la revendication 1 dans lequel on dispose pour chaque doseur fluidisé hyperdense (40) d'un moyen de réglage (72) individualisé de la pression de fluidisation p'f.

3. Procédé selon la revendication 1 ou 2 dans lequel on crée dans le canal supérieur (32) de l'aérocanalisation (30) une bulle (B) de gaz sous pression.

4. Dispositif de convoyage d'un matériau pulvérulent permettant de répartir dans plusieurs convoyeurs (50) ledit matériau pulvérulent provenant d'une capacité de stockage unique (10) avec un débit contrôlé dans chacun desdits convoyeurs **caractérisé en ce qu'**il comprend au moins une aérocanalisation (30) sur laquelle sont branchés des doseurs fluidisés hyperdenses (40) destinés à alimenter chacun des convoyeurs,
- ladite aérocanalisation (30) étant un convoyeur horizontal ou légèrement incliné comprenant un premier canal destiné à la circulation d'un gaz et un second canal destiné à la circulation du matériau pulvérulent, les deux canaux ayant une paroi commune poreuse, le premier canal étant muni d'au moins une tubulure d'alimentation en gaz permettant d'établir une pression p_{f} dans le but de fluidiser potentiellement le matériau pulvérulent remplissant le convoyeur et le deuxième canal étant muni d'au moins une colonne d'équilibrage dont la hauteur de remplissage équilibre la pression p_{f} du gaz de fluidisation potentielle,
- ledit doseur fluidisé étant un dispositif comprenant un caisson (42), une colonne (43) permettant d'alimenter en matière pulvérulente le caisson à partir dudit second canal de ladite aérocanalisation (30), une colonne d'équilibrage (46) et un moyen d'évacuation de ladite matière pulvérulente, ledit caisson comprenant deux parties (42A et 42B) séparées par une paroi poreuse (44), la première partie (42B), destinée à la circulation du gaz de fluidisation étant munie d'au moins une tubulure d'alimentation en gaz permettant d'établir une pression p'_{f} dans le but de fluidiser potentiellement le matériau pulvérulent remplissant le doseur et la seconde partie (42A), destinée à la circulation de ladite matière pulvérulente, étant reliée à ladite colonne d'alimentation (43), audit moyen d'évacuation et à ladite colonne d'équilibrage (46) dont la hauteur de remplissage permet d'équilibrer la pression p'f de fluidisation potentielle, ledit moyen d'évacuation, comprenant un orifice (48) et un ajutage (48A) de sortie dont le diamètre interne est supérieur à celui de l'orifice, étant disposé à une distance suffisante de la colonne d'alimentation (43) pour qu'en l'absence de fluidisation, il ne puisse pas être atteint par le pied du talus naturel d'éboulement.

## Patentansprüche

1. Verfahren zur Förderung von pulverförmigem Material, welches es ermöglicht, das aus einem einzigen Vorratsbehälter (10) kommende pulverförmige Material in mehreren Förderern (50) mit gesteuertem Durchsatz in jedem Förderer zu verteilen, **dadurch gekennzeichnet, dass** der Vorratsbehälter über mindestens eine Luftrinne (30) mit den Förderern verbunden wird und dass an die Luftrinne ein hochdichter fluidisierter Dosierer (40) zur Versorgung jedes Förderers angeschlossen wird,
- wobei die Luftrinne (30) ein horizontaler oder leicht geneigter Förderer ist, welcher einen ersten Kanal für die Zirkulation eines Gases und einen zweiten Kanal für die Zirkulation des pulverförmigen Materials aufweist, wobei beide Kanäle eine poröse gemeinsame Wand haben, wobei der erste Kanal mit mindestens einem Gaseinleitungsstutzen zum Aufbau eines Druckes p_{f} zwecks potentieller Fluidisierung des in dem Förderer enthaltenen pulverförmigen Materials versehen ist und der zweite Kanal mit mindestens einer Ausgleichssäule versehen ist, deren Füllhöhe den Druck p_{f} des potentiellen Fluidisierungsgases ausgleicht,
- wobei der fluidisierte Dosierer eine Vorrichtung ist, welche ein Gefäß (42), eine Säule (43) zur Versorgung des Gefäßes mit pulverförmigem Material aus dem zweiten Kanal der Luftrinne (30), eine Ausgleichssäule (46) und ein Mittel zur Ableitung des pulverförmigen Materials umfasst, wobei das Gefäß zwei durch eine poröse Wand (44) getrennte Bereiche (42A und 42B) aufweist, wobei der erste Bereich (42B) zur Zirkulation des Fluidisierungsgases mit mindestens einem Gaseinleitungsstutzen zum Aufbau eines Druckes p'_{f} zwecks potentieller Fluidisierung des in dem Dosierer enthaltenen pulverförmigen Materials versehen ist und der zweite Bereich (42A) zur Zirkulation des pulverförmigen Materials mit der Versorgungssäule (43), dem Ableitungsmittel und der Ausgleichssäule (46) verbunden ist, deren Füllhöhe den potentiellen Fluidisierungsdruck p'f auszugleichen vermag, wobei das Ableitungsmittel, welches eine Öffnung (48) sowie einen Austrittsstutzen (48A) aufweist, dessen Innendurchmesser größer ist als der Innendurchmesser der Öffnung, in ausreichend großem Abstand von der Versorgungssäule (43) angeordnet ist, damit es bei fehlender Fluidisierung nicht mit dem Fuß der natürlichen Böschung beim Abrutschen in Kontakt gelangt.

2. Verfahren nach Anspruch 1, bei dem für jeden hochdichten fluidisierten Dosierer (40) ein Mittel (72) zur individuellen Regelung des Fluidisierungsdruckes p'f zur Verfügung steht.

3. Verfahren nach Anspruch 1 oder 2, bei dem im oberen Kanal (32) der Luftrinne (30) eine Blase (B) aus Druckgas erzeugt wird.

4. Vorrichtung zur Förderung von pulverförmigem Material, welche es ermöglicht, das aus einem einzigen Vorratsbehälter (10) kommende pulverförmige Material in mehreren Fördern (50) mit gesteuertem Durchsatz in jedem Förderer zu verteilen, **dadurch gekennzeichnet, dass** sie mindestens eine Luftrinne (30) aufweist, an die hochdichte fluidisierte Dosierer (40) zur Versorgung jedes Förderers angeschlossen sind,
- wobei die Luftrinne (30) ein horizontaler oder leicht geneigter Förderer ist, welcher einen ersten Kanal für die Zirkulation eines Gases und einen zweiten Kanal für die Zirkulation des pulverförmigen Materials aufweist, wobei beide Kanäle eine poröse gemeinsame Wand haben, wobei der erste Kanal mit mindestens einem Gaseinleitungsstutzen zum Aufbau eines Druckes p_{f} zwecks potentieller Fluidisierung des in dem Förderer enthaltenen pulverförmigen Materials versehen ist und der zweite Kanal mit mindestens einer Ausgleichssäule versehen ist, deren Füllhöhe den Druck p_{f} des potentiellen Fluidisierungsgases ausgleicht,
- wobei der fluidisierte Dosierer eine Vorrichtung ist, welche ein Gefäß (42), eine Säule (43) zur Versorgung des Gefäßes mit pulverförmigem Material aus dem zweiten Kanal der Luftrinne (30), eine Ausgleichssäule (46) und ein Mittel zur Ableitung des pulverförmigen Materials umfasst, wobei das Gefäß zwei durch eine poröse Wand (44) getrennte Bereiche (42A und 42B) aufweist, wobei der erste Bereich (42B) zur Zirkulation des Fluidisierungsgases mit mindestens einem Gaseinleitungsstutzen zum Aufbau eines Druckes p'_{f} zwecks potentieller Fluidisierung des in dem Dosierer enthaltenen pulverförmigen Materials versehen ist und der zweite Bereich (42A) zur Zirkulation des pulverförmigen Materials mit der Versorgungssäule (43), dem Ableitungsmittel und der Ausgleichssäule (46) verbunden ist, deren Füllhöhe den potentiellen Fluidisierungsdruck p'f auszugleichen vermag, wobei das Ableitungsmittel, welches eine Öffnung (48) sowie einen Austrittsstutzen (48A) aufweist, dessen Innendurchmesser größer ist als der Innendurchmesser der Öffnung, in ausreichend großem Abstand von der Versorgungssäule (43) angeordnet ist, damit es bei fehlender Fluidisierung nicht mit dem Fuß der natürlichen Böschung beim Abrutschen in Kontakt gelangt.

## Claims

1. Method for conveying a pulverulent material making it possible to divide said pulverulent material, coming from a single storage capacity (10), between several conveyors (50) with a controlled flow rate in each of said conveyors, **characterised in that** said storage capacity is linked to said conveyors by at least one aero-pipe (30) and **in that** a hyperdense fluidised meter (40) is connected to said aero-pipe, intended to feed each of the conveyors,
- said aero-pipe (30) being a conveyor, either horizontal or slightly inclined, comprising a first channel intended for the circulation of a gas and a second channel intended for the circulation of the pulverulent material, the two channels having a common porous wall, the first channel being provided with at least one gas feed tube making it possible to produce a pressure p_{f} with the aim of potentially fluidising the pulverulent material filling the conveyor and the second channel being provided with at least one balancing column with filling height balancing the pressure p_{f} of the potential fluidisation gas,
- said fluidised meter being a device comprising a housing (42), a column (43) making it possible to feed the housing with pulverulent material from said second channel of said aero-pipe (30), a balancing column (46) and an evacuation means for said pulverulent material, said housing comprising two parts (42A and 42B) separated by a porous wall (44), the first part (42B), intended for the circulation of fluidising gas being provided with at least one gas feed tube making it possible to produce a pressure p'_{f} with the aim of potentially fluidising the pulverulent material filling the meter and the second part (42A), intended for the circulation of said pulverulent material, being connected to said supply column (43), to said evacuation means and to said balancing column (46) whose filling height makes it possible to balance the pressure p'_{f} of potential fluidisation, said evacuation means, comprising an orifice (48) and an outlet nozzle (48A) with internal diameter greater than that of the orifice, being set at a sufficient distance from the supply column (43) so that, in the absence of fluidisation, it cannot be reached by the foot of the natural angle of repose.

2. Method according to claim 1 in which, for each hyperdense fluidised meter (40) there exists an individualised adjustment means (72) for the fluidisation pressure p'_{f}.

3. Method according to either one or the other of claims 1 or 2 in which, in the upper channel (32) of the aero-pipe (30) a bubble (B) of gas under pressure is created.

4. Device for conveying a pulverulent material making it possible to divide said pulverulent material, from a single storage capacity (10), between several conveyors (50) with a controlled flow rate in each of said conveyors, **characterised in that** it comprises at least one aero-pipe (30) on which the hyperdense fluidised meters (40) intended to feed each of the conveyors, are branched,
- said aero-pipe (30) being a conveyor, either horizontal or slightly inclined, comprising a first channel intended for the circulation of a gas and a second channel intended for the circulation of the pulverulent material, the two channels having a common porous wall, the first channel being provided with at least one gas feed tube making it possible to produce a pressure p_{f} with the aim of potentially fluidising the pulverulent material filling the conveyor and the second channel being provided with at least one balancing column whose filling height balances the pressure p_{f} of the potential fluidising gas.
- said fluidised meter being a device comprising a housing (42), a column (43) making it possible to feed the housing with pulverulent material from said second channel of said aero-pipe (30), a balancing column (46) and an evacuation means for said pulverulent material, said housing comprising two parts (42A and 42B) separated by a porous wall (44), the first part (42B), intended for the circulation of the fluidising gas being provided with at least one gas feed tube making it possible to produce a pressure p'_{f} with the aim of potentially fluidising the pulverulent material filling the meter and the second part (42A), intended for the circulation of said pulverulent material, being connected to said supply column (43), to said evacuation means and to said balancing column (46) with filling height making it possible to balance the pressure p'_{f} of potential fluidisation, said evacuation means, comprising an orifice (48) and an outlet nozzle (48A) with internal diameter greater than that of the orifice, being set at a sufficient distance from the supply column (43) so that, in the absence of fluidisation, it cannot be reached by the foot of the natural angle of repose.
